# EUROPÄISCHE PATENTANMELDUNG

(11) **EP 1 582 906 A1**
(43) Veröffentlichungstag der Anmeldung: **05.10.2005**
(21) Anmeldenummer: 04008023.6
(22) Anmeldetag: 01.04.2004
(51) Int. Cl.: G02B 26/12, G02B 7/182

(54) **Bestimmung der Auslenkung von Mikrospiegeln in einem Projektionssystem**

(71) Anmelder: SIEMENS AKTIENGESELLSCHAFT, 80333 München (DE)
(72) Erfinder: Hying, Ralf, 81825 München (DE); Werner, Marco, 81475 München (DE)

(57) **Zusammenfassung**

Die Erfindung betrifft ein Projektionssystem mit einer Lichtquelle, insbesondere mit einer Laser-Lichtquelle, bei dem ausgehend von der Lichtquelle über einen Schwingspiegel (1) ein Projektions-Lichtbündel erzeugt wird. Erfindungsgemäß ist eine Lichtschranke (3) zur Positionserfassung des Spiegels (1) vorgesehen.

## Beschreibung

Die Erfindung betrifft ein Projektionssystem gemäss dem Oberbegriff des Patentanspruchs 1.

Ein solches Projektionssystem und insbesondere Laser-Projektionssystem wird vorzugsweise bei miniaturisierten Projektionsgeräten eingesetzt.

In Folge der allgemeinen Miniaturisierung von mobilen Geräten einerseits und der ständig wachsenden darzustellenden Datenmenge andererseits wird es zukünftig immer schwieriger werden, diesen beiden Entwicklungen beispielsweise in einem Mobiltelefon gerecht zu werden. Die Miniaturisierung von Projektionsgeräten zu deren Verwendung im Zusammenspiel mit Mobiltelefonen kann einen Ausweg aus diesem Gegensatz bedeuten.

Eine vielversprechende Ausführung von Mini-Projektoren ist die Projektion mit Hilfe eines über einen Mikrospiegel abgelenkten Laserstrahls. Dabei scannt der Strahl die Projektionsfläche zeilenweise ab, ähnlich wie der Elektrodenstrahl in einer Kathodenstrahlröhre.

Der Aufbau und die Funktionsweise eines solchen Mikrospiegels oder allgemeiner Mikroaktors wird im folgenden kurz beschrieben.

Zur Herstellung von Mikroaktoren werden vorzugsweise Techniken verwendet, die sich bei der Fertigung mikroelektronischer Bauelemente in der Silizium-Planartechnologie bewährt haben und eine wirtschaftliche Fertigung erlauben. Darunter fallen insbesondere Abscheideprozesse zur Schichterzeugung, photolithographische Prozesse zur Strukturübertragung und Ätzprozesse zur Strukturierung. Durch die monolithische oder hybride Kombination von mikromechanisch gefertigten Aktoren und der entsprechenden integrierten elektronischen Ansteuerung beziehungsweise Signalverarbeitung entsteht ein Mikrosystem mit im Vergleich zu konventionellen Systemen extrem geringen Abmessungen, höherer Zuverlässigkeit und erweiterten beziehungsweise neuartigen Funktionen.

Voraussetzung für die Herstellung eines solchen Mikrosystems ist die Verwendung von Aktoren, die mit IC-kompatiblen Spannungen betrieben werden können, besonders auch im Hinblick darauf, wenn diese Systeme dem Einsatz in mobilen Geräten gerecht werden sollen.

Im Allgemeinen versteht man unter einem mikromechanischen Scannerspiegel einen Mikroaktor, der zur kontrollierten Ablenkung von Licht genutzt wird. Um ein größtmögliches Maß an Miniaturisierung zu erreichen, werden diese Aktoren nicht mehr mit konventionellen feinmechanischen Herstellungsverfahren produziert, sondern es werden die oben genannten Verfahren zur Mikrostrukturierung genutzt.

Der grundsätzliche Aufbau eines derartigen Aktors besteht im Wesentlichen aus einer reflektierenden Spiegelplatte die über Torsions- oder Biegefedern an einem die Spiegelfläche umgebenden Rahmen aufgehängt sind. Aus der Vielzahl von Ansteuerungsmöglichkeiten werden im Folgenden kurz genannt:
- Magnetische Anregung
   Hierbei wird in eine auf der Spiegelfläche aufgebrachte Leiterschleife ein Strom eingeprägt. Ändert sich nun der Stromfluss in der Leiterschleife, so entsteht durch das von außen angelegte Magnetfeld ein tordierendes Moment auf die Spiegelplatte.
- Thermomechanische Anregung
   Um bei diesem Verfahren den Aktor zum Auslenkung zu zwingen, wird die Spiegelfläche über zwei Bimetallstreifen aufgehängt. Zum Erwärmen der Streifen wird der Strom über einen hin- und über den anderen zurückgeführt.
- Piezoelektrische Anregung
   Der transversale piezoelektrische Effekt kann zur Auslenkung einer Spiegelplatte verwendet werden. Die piezoelektrische Schicht befindet sich zwischen zwei Elektroden. Bei angelegter elektrischer Spannung wird auf den vorderen Teil der Spiegelplatte eine mechanische Spannung übertragen, die eine Verbiegung innerhalb dieses Bereichs bewirkt. Abhängig vom Vorzeichen der Spannung U wird somit eine Auslenkung nach oben oder unten erzielt.
- Elektrostatische Anregung
   Dieses Ansteuerungsprinzip ist das bisweilen am häufigsten beschriebene Verfahren zur Nutzung dieser mikromechanischen Scannerspiegel. Das Verfahren beruht auf der elektrostatischen Anziehung von Elektrode und Gegenelektrode bei angelegter Spannung. Beispielsweise bei einem 1D-Scannerspiegels stellt die reflektierende Spiegelplatte selbst eine Elektrode dar, und zwei Gegenelektroden werden durch eine Schicht unterhalb der Platte gebildet.

Anhand der unterschiedlichen Einsatzgebiete kann die Anregungsform zur elektrostatischen Ablenkung der Mikrospiegel grob in zwei Gruppen eingeteilt werden.

Die erste Gruppe beinhaltet Spiegel zur quasistatischen Ablenkung von Licht, wie es häufig bei Lasern zur Materialbearbeitung der Fall ist. Da die permanente Auslenkung des Spiegels abhängig von der Höhe der angelegten Spannung ist, lassen sich damit auch beliebig niedrige Schwingungsfrequenzen realisieren.

Spiegel zur kontinuierlichen, harmonischen Ablenkung von Licht bilden die zweite Gruppe. Diese Form der Ansteuerung wird überwiegend bei Lesesystemen für Strichcodes eingesetzt.

Die Anregung der Spiegelschwingung kann dabei in Resonanz erfolgen, wobei entsprechend der mechanischen Güte des Systems höhere Auslenkwinkel als bei der quasistatischen Anregung erzielt werden können. Die Schwingungsfrequenzen sind hierbei abhängig vom mechanischen Aufbau, und reichen von einigen 100Hz bis einigen 10kHz.

Durch eine kardanische Aufhängung eines 2D-Scannerspiegels ist es möglich die Vorteile der beiden Ansteuerungsformen in einem Chip zu vereinen. Die Spiegelplatte selbst vollzieht hierbei die schnelle, resonante Bewegung und ist über zwei Silizium Torsionsfedern an einem inneren Rahmen befestigt. Dieser führt die langsame, quasistatische Schwingung aus, und wird wiederum durch zwei Nickel Torsionsfedern mit einem äußeren Rahmen verbunden

Ein Bild entsteht nun, indem die Bilddaten auf den Laserstrahl moduliert werden. Dieser modulierte Laserstrahl wird vom Scanner-Spiegel aufgefächert und als Lichtbündel projeziert.

Um die Bildinformationen auf den Laserstrahl modulieren zu können ist es erforderlich zu wissen, an welcher Stelle der Projektion sich dieser befindet. Wie von Kathodenstrahlröhren bekannt werden dazu horizontale (zu jedem Zeilenanfang) und vertikale (zu Beginn eines Bildes) Synchronisationsimpulse benötigt, die aus der Spiegelbewegung abgeleitet werden.

Ein weiteres Problem ist die Produktsicherheit bei Laserprojektoren. Im Falle eines unbewegten Spiegels tritt der Projektionsstrahl unabgelenkt aus dem Projektionsgerät aus und kann so die gesetzlichen Bestrahlungs-Grenzwerte überschreiten. Daher ist es zwingend erforderlich, sicher zu wissen, ob der Spiegel schwingt. So kann bei nicht schwingendem Spiegel der Laser abgeschaltet werden.

Eine mögliche Methode ist die Kapazität des schwingenden Mikrospiegels zu messen, um Aufschluss über die Auslenkung des Spiegels und damit die Position des Laserstrahls zu bekommen. Da die Kapazitätsänderungen sich jedoch üblicherweise im Bereich unter 1pF bewegen, ist diese Methode schaltungstechnisch sehr aufwendig und ungenau, da die Messung durch die überlagerten , hohen Anregungsspannungen für den Spiegel stark gestört wird.

Der Erfindung liegt die Aufgabe zugrunde ein Projektionssystem mit einer sicheren und zuverlässigen Positionsbestimmung des Mikro-Schwingspiegels anzugeben.

Diese Aufgabe wird erfindungsgemäss durch die im Patentanspruch 1 angegebenen Merkmale gelöst.

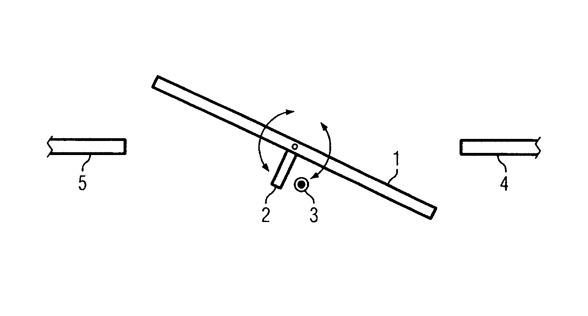

Im folgenden wird die Erfindung anhand eines in der Zeichnung dargestellten Ausführungsbeispieles näher beschrieben.

Die erfindungsgemäße Positionsbestimmung erfolgt zuverlässig und robust auf optischem Wege.

Die Erfindung geht aus von einem Projektionssystem, das im wesentlichen einen Laser als Lichtquelle (nicht explizit dargestellt) und einen Mikro-Schwingspiegel (1) in einem Gehäuse aufweist. Die Lichtquelle kann auch durch eine LED oder eine IR-LED realisiert sein. Ausgehend von der Lichtquelle wird über den Schwingspiegel ein Projektions-Lichtbündel erzeugt

In der einzigen Figur ist dieser Spiegel 1 dargestellt, der beidseitig beispielsweise von zwei Antriebselektroden 4 und 5 elektrostatisch ausgelenkt wird.

Erfindungsgemäß wird über eine Lichtschranke 3 die Position beziehungsweise die Bewegung des Spiegels 1 erfasst.

Hierzu ist beispielsweise auf der Unterseite des Schwingspiegels 1 ein dünner Zapfen 2 befestigt. Die Lichtschranke 3 ist senkrecht zur Schwingungsebene des Spiegels 1 derart angeordnet, so dass der Zapfen 2 beispielsweise dann den Lichtstrahl unterbricht, wenn der Spiegel 1 sich in einer charakteristischen Position befindet. Dies kann eine Ruhelage oder eine Endlage des Spiegels 1 sein. Durch Auswertung der Lichtschranken-Signale kann somit direkt auf die Spiegelposition und weiter den Schwingvorgang überhaupt geschlossen werden.

## Patentansprüche

1. Projektionssystem mit einer Lichtquelle, insbesondere mit einer Laser-Lichtquelle,
bei dem ausgehend von der Lichtquelle über einen Schwingspiegel (1) ein Projektions-Lichtbündel erzeugt wird,
**gekennzeichnet durch**
eine Lichtschranke (3) zur Positionserfassung des Spiegels (1) .

2. Projektionssystem nach Anspruch 1,
**dadurch gekennzeichnet dass**
der Spiegel (1) einen an seiner Rückseite angeordneten Zapfen (2) zur Interaktion mit der Lichtschranke (3) aufweist.
